# EUROPEAN PATENT APPLICATION

(11) **EP 4 464 218 A1**
(43) Date of publication of application: **20.11.2024**
(21) Application number: 23743439.4
(22) Date of filing: 17.01.2023
(51) Int. Cl.: A47L 9/28, A47L 9/04, G01P 15/00

(54) **VACUUM CLEANER AND METHOD FOR CONTROLLING VACUUM CLEANER**

(30) Priority: 21.01.2022 KR 20220009147
(71) Applicant: LG Electronics Inc., Yeongdeungpo-gu Seoul 07336 (KR)
(72) Inventor: LEE, Jaehoon, Seoul 08592 (KR); PARK, Jongil, Seoul 08592 (KR); PARK, Heegu, Seoul 08592 (KR); KIM, Hyungsub, Seoul 08592 (KR); KIM, Daewoo, Seoul 08592 (KR)
(74) Representative: Schott, Jakob Valentin
(86) International application number: PCT/KR2023/000821
(87) International publication number: WO 2023/140592

(57) **Abstract**

Provided is a cleaner including: a suction nozzle configured to suck in outside air; a brush motor configured to rotate a brush installed in the suction nozzle and sweeping up dust; a suction motor configured to generate a suction force of the suction nozzle; an acceleration sensor installed on the suction nozzle and configured to sense accelerations along three axes that are orthogonal to each other in a spatial coordinate system; a power supply unit configured to supply power to the brush motor and the acceleration sensor; and a controller configured to control the brush motor, the suction motor, and the power supply unit based on a variation of an x-axis acceleration provided by the acceleration sensor and a sum of acceleration variations which is obtained by summing variations of x-, y-, and z-axis accelerations provided by the acceleration sensor.

## Description

### [Technical Field]

The present disclosure relates to technology for controlling a cleaner based on a user's intention and a state of a suction nozzle in a cleaner.

### [Background Art]

Cleaners may be classified into a manual cleaner for cleaning while a user directly moves the cleaner, and a robot cleaner for cleaning while traveling by itself. In addition, the manual cleaner may be classified into a canister-type cleaner, an upright-type cleaner, a handy-type cleaner, a stick-type cleaner, or the like, depending on the shape of the cleaner.

The cleaner includes an impeller and a suction motor for rotating the impeller to provide the driving force to suck in dust.

The handy-type cleaner has a problem in that when a user operates a suction nozzle, it is required to change a degree of suction and a speed of a brush according to a user's intention in order to provide efficient cleaning, but it is impossible to accurately determine a user's intention.

In addition, cleaning is generally performed while the suction nozzle is in contact with the floor, but a user may lift up the suction nozzle due to stairs and steps or to move the suction nozzle to a working space. In this case, an agitator included in the suction nozzle is exposed to the outside, thereby causing a safety problem when contacting a user's finger.

Further, when a user moves an object during cleaning, the user turns off the power of the cleaner or the suction motor by operating the cleaner. In this case, however, it is inconvenient for the user to manually operate the cleaner.

In addition, there is also a problem in that if a user does not turn off the cleaner when moving an object during cleaning, a cleaning time of a rechargeable vacuum cleaner is reduced.

### [Prior art document]

### [Patent document]

Korean utility model registration No. 2001658010000

### [Disclosure of Invention]

### [Technical Problem]

It is a first objective of the present disclosure to provide a cleaner in which by reflecting a user's intention during cleaning, a suction motor and a brush motor may be temporarily stopped when it is necessary to temporarily stop the suction motor and the brush motor, and the cleaner may be turned off when it is necessary to turn off the power of the cleaner, thereby increasing the usage time of the cleaner.

It is a second objective of the present disclosure to provide a cleaner capable of controlling a rotation speed of a brush by reflecting a user' s intention during cleaner, thereby reducing the energy consumption of the cleaner, and allowing efficient cleaning.

It is a third objective of the present disclosure to provide a cleaner in which a lifted state of a suction nozzle during cleaning is identified, such that when the suction nozzle is in a lifted state, a brush motor and/or a suction motor are stopped, thereby protecting a user from being injured when the user's finger or the like is caught in the suction part of the suction nozzle.

It is a fourth objective of the present disclosure to provide a cleaner capable of identifying a user's intention not by detecting the forward and backward movement of a suction nozzle, but by comprehensively considering movement along three axes.

### [Solution to Problem]

In order to solve the above problems, a stop motion of a suction nozzle is determined based on accelerations along the three axes of a suction nozzle, and upon determining the stop motion, a brush motor and a suction motor are turned off.

In addition, a stop motion of a suction nozzle is determined based on accelerations along the three axes of a suction nozzle, and upon determining the stop motion, the power of a cleaner is turned off.

Specifically, the present disclosure provides a cleaner including: a suction nozzle configured to suck in outside air; a brush motor configured to rotate a brush installed in the suction nozzle and sweeping up dust; a suction motor configured to generate a suction force of the suction nozzle; an acceleration sensor installed on the suction nozzle and configured to sense accelerations along three axes that are orthogonal to each other in a spatial coordinate system; a power supply unit configured to supply power to the brush motor and the acceleration sensor; and a controller configured to control the brush motor, the suction motor, and the power supply unit based on a variation of an x-axis acceleration provided by the acceleration sensor and a sum of acceleration variations which is obtained by summing variations of x-, y-, and z-axis accelerations provided by the acceleration sensor.

The controller may be configured to determine a stop motion of the suction nozzle based on the acceleration variation provided by the acceleration sensor, and in response to the stop motion of the suction nozzle being maintained for a first period of time or more, may be configured to turn off the brush motor and the suction motor.

The controller may be configured to determine a stop motion of the suction nozzle based on the acceleration variation provided by the acceleration sensor, and in response to the stop motion of the suction nozzle being maintained for a second period of time or more, may be configured to turn off the power supply unit.

The controller may be configured to determine a stop motion of the suction nozzle based on the acceleration variation provided by the acceleration sensor, and in response to the stop motion of the suction nozzle being maintained for a first period of time or more, may be configured to turn off the brush motor and the suction motor, and in response to the stop motion of the suction nozzle being maintained for a second period of time greater than the first period of time, may be configured to turn off the power supply unit.

In response to the x-axis acceleration variation being greater than or equal to a first stop reference value and the sum of acceleration variations being greater than or equal to a second stop reference value, the controller may be configured to determine that a motion of the suction nozzle is the stop motion.

The controller may be configured to control a rotation speed of the brush based on the variation of the x-axis acceleration provided by the acceleration sensor and the sum of acceleration variations which is obtained by summing the variations of the x-, y-, and z-axis accelerations provided by the acceleration sensor.

In response to the x-axis acceleration variation being greater than or equal to a first reference value, the controller may be configured to change the rotation speed of the brush to a high speed.

In response to the sum of acceleration variations being greater than or equal to a second reference value, the controller may be configured to change the rotation speed of the brush to a high speed.

In response to the x-axis acceleration variation being greater than or equal to a first reference value, or in response to the sum of acceleration variations being greater than or equal to the second reference value, the controller may be configured to change the rotation speed of the brush to a high speed.

In response to the x-axis acceleration variation being smaller than the first reference value and greater than or equal to a third reference value, the controller may be configured to change the rotation speed of the brush to a medium speed.

In response to the sum of acceleration variations being smaller than the second reference value and greater than or equal to a fourth reference value, the controller may be configured to change the rotation speed of the brush to a medium speed.

In response to the x-axis acceleration variation being smaller than the third reference value, and in response to the sum of acceleration variations being smaller than the fourth reference value, the controller may be configured to change the rotation speed of the brush to a low speed.

In response to the x-axis acceleration variation being greater than or equal to the first reference value, and in response to the sum of acceleration variations being greater than or equal to the second reference value, the controller may be configured to change a rotation speed of the suction motor to a high speed.

In response to the x-axis acceleration variation being smaller than the first reference value and greater than or equal to the third reference value, the controller may be configured to change the rotation speed of the suction motor to a medium speed.

In response to the x-axis acceleration variation being smaller than the third reference value, and in response to the sum of acceleration variations being smaller than the fourth reference value, the controller may be configured to change the rotation speed of the suction motor to a low speed.

The controller may be configured to turn off at least one of the brush motor, the suction motor, and the power supply unit based on the variation of the x-axis acceleration provided by the acceleration sensor and the sum of acceleration variations which is obtained by summing the variations of the x-, y-, and z-axis accelerations provided by the acceleration sensor.

In addition, the cleaner may further include a suction port through which the outside air is introduced, the suction port formed in a lower surface of the suction nozzle, wherein the y-axis may be a direction parallel to a direction of a rotating shaft of the brush, the x-axis may be a direction orthogonal to the y-axis, and the z-axis may be a direction orthogonal to the x-axis, the y-axis, and the lower surface of the suction nozzle.

In response to determining that a motion of the suction nozzle is not the stop motion, the controller may be configured to control a rotation speed of the brush and a rotation speed of the suction motor based on the variation of the x-axis acceleration provided by the acceleration sensor and the sum of acceleration variations which is obtained by summing the variations of the x-, y-, and z-axis accelerations provided by the acceleration sensor.

In addition, the present disclosure provides a controlling method including: a detecting operation of detecting accelerations along three axes of a suction nozzle; a determining operation of determining a stop motion of the suction nozzle based on the accelerations along the three axes; and a pause operation of turning off a brush motor and a suction motor in response to the stop motion of the suction nozzle being maintained for a first period of time.

In addition, the controlling method may further include a power-off operation of turning off power of the cleaner in response to the stop motion of the suction nozzle being maintained for a second period of time greater than the first period of time.

The determining operation may further include determining the stop motion of the suction nozzle in response to an x-axis acceleration variation being greater than or equal to a first stop reference value, and a sum of acceleration variations being greater than or equal to a second stop reference value.

### [Advantageous Effects of Disclosure]

Through the above solution, by reflecting a user's intention during cleaning, a suction motor and a brush motor may be temporarily stopped when it is necessary to temporarily stop the suction motor and the brush motor, and the cleaner may be turned off when it is necessary to turn off the power of the cleaner, such that when a user performs an action other than cleaning, such as moving an object and the like, during cleaning, it is not required to control the cleaner, thereby improving user convenience and increasing the usage time of the cleaner.

In the present disclosure, by controlling a rotation speed of a brush by reflecting a user's intention during cleaner, it is possible to identify when a user wants to increase the speed of the brush, thereby reducing the energy consumption of the cleaner, and allowing efficient cleaning.

In the present disclosure, a lifted state of a suction nozzle during cleaning may be identified, such that when the suction nozzle is in a lifted state, a brush motor and/or a suction motor are stopped, thereby protecting a user from being injured when the user's finger or the like is caught in the suction part of the suction nozzle.

In the present disclosure, a lifted state or an overturned state of a suction nozzle during cleaning may be identified, and when the suction nozzle is in a lifted state, a brush motor and/or a suction motor are stopped, thereby reducing energy by stopping the motor when the suction nozzle does not perform its function, and increasing the operating time of the cleaner.

In the present disclosure, by determining a tilt state of a suction nozzle during cleaning, and by stopping the brush motor a and/or the suction motor or reducing the speed of the brush motor and/or the suction motor based on a degree of tilt, a user's risk of injury may be reduced, and the waste of energy may be reduced.

In the present disclosure, a user's intention is identified not by detecting the forward and backward movement of a suction nozzle, but by comprehensively considering movement along three axes, such that user convenience may be further improved.

### [Brief Description of Drawings]

FIG. 1 is a side elevation view illustrating a state of use of a cleaner 1 according to an embodiment of the present disclosure.
FIG. 2 is a perspective view of the cleaner 1 from which a nozzle module 70 is removed from FIG. 1.
FIG. 3 is a side elevation view of the cleaner 1 of FIG. 2.
FIG. 4 is a top elevation view of the cleaner 1 of FIG. 2.
FIG. 5 is a cross-sectional view of the cleaner 1 of FIG. 3 taken horizontally along line S1-S1'.
FIG. 6 is a cross-sectional view of the cleaner 1 of FIG. 4 taken vertically along line S2-S2'.
FIG. 7 is a diagram illustrating a suction nozzle according to an embodiment of the present disclosure.
FIG. 8 is a cross-sectional view of the suction nozzle of FIG. 7.
FIG. 9 is a block diagram illustrating exemplary components of a cleaner according to an embodiment of the present disclosure.
FIG. 10 is a diagram illustrating a change in acceleration over time according to an embodiment of the present disclosure.
FIG. 11 is a flowchart illustrating a method of controlling a cleaner according to an embodiment of the present disclosure.
FIG. 12 is a diagram illustrating a change in acceleration over time according to another embodiment of the present disclosure.
FIG. 13 is a flowchart illustrating a method of controlling a cleaner according to another embodiment of the present disclosure.

### [Mode for the Invention]

The present disclosure will be described below based on a spatial Cartesian coordinate system formed by the X-axis, Y-axis, and Z-axis that are orthogonal to each other. Each axial direction (X-axis direction, Y-axis direction, Z-axis direction) means both directions in which each axis extends. A '+' sign in front of each axis direction (+X-axis direction, + Y-axis direction, +Z-axis direction) means a positive direction, which is one of both directions in which each axis extends. A '-' sign in front of each axis direction (-X-axis direction, -Y-axis direction, -Z-axis direction) means a negative direction, which is the other of both directions in which each axis extends.

Although expressions designating directions such as "front (+Y)/rear (-Y)/left (+X)/right (-X)/up (+Z)/down (-Z)" mentioned below is defined according to the XYZ coordinate axis, these are simply given to explain the present disclosure for clear understanding, and it is obvious that the respective directions may be defined in different ways depending on the reference point.

The use of terms with the expression 'first, second, third, etc.' in front of the elements mentioned below is only used to avoid confusion of the elements, and is not related to the order, importance, or master/slave relationships between elements, or the like. For example, an invention including only a second element without a first element can be implemented.

An expression of the singular number used herein may include an expression of the plural number unless clearly defined otherwise in the context.

The cleaner according to the present disclosure may be a manual cleaner or a robot cleaner. That is, if a manual cleaner, which is represented by a handy-type, a canister, and an upright type, and a robot cleaner, which is capable of autonomous driving of a cleaning space, include a flow path identical or similar to the present disclosure, the inventions defined in the claims of the present disclosure can be applied.

Hereinafter, a cleaner 1 according to an embodiment of the present disclosure will be described by taking a handy type manual cleaner as an example.

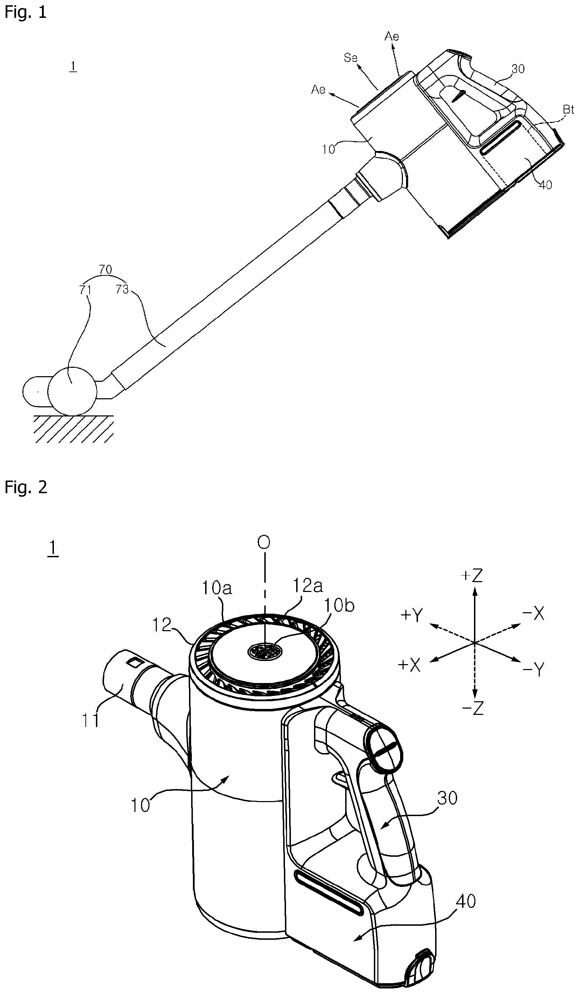

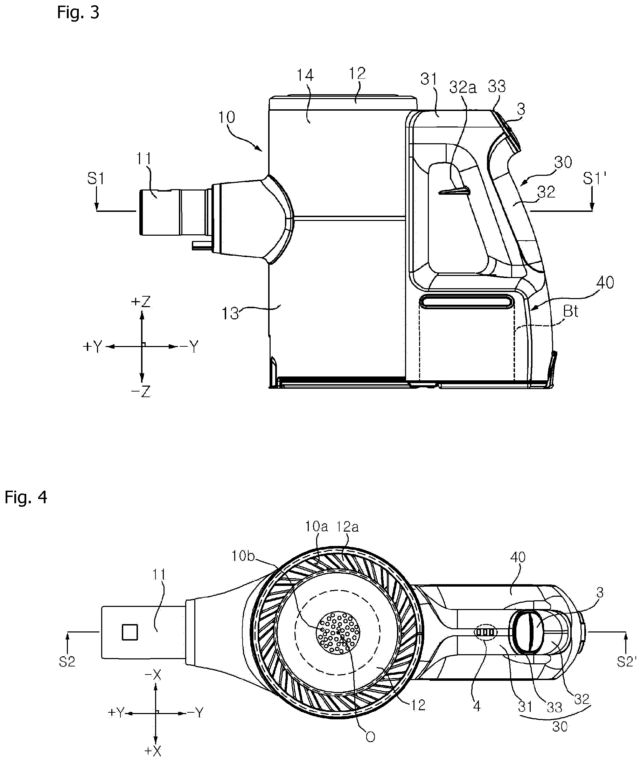

Referring to FIGS. 1 to 6, the cleaner 1 according to an embodiment of the present disclosure includes a main body 10 having a flow path P for guiding drawn air to be discharged to the outside. The cleaner 1 includes a dust separator 20 disposed in the flow path P and configured to separate dust in the air. The cleaner 1 includes a handle 30 mounted to one side of the main body 10.

The cleaner 1 includes a battery Bt supplying power and a battery housing 40 in which the battery Bt is accommodated. The cleaner 1 includes fan modules 50 and 50' disposed in the flow path P and configured to move the air in the flow path. The cleaner 1 includes filters 61 and 62 disposed in the flow path P and configured to separate dust in the air, in addition to the dust separator 20.

The cleaner 1 includes a nozzle module 70 detachably connected to a suction tube 11 of the main body 10. The cleaner 1 includes an input unit 3 for inputting on or off or suction mode and the like of the cleaner 1, and an output unit 4 for displaying various states of the cleaner 1 for a user.

Meanwhile, the cleaner 1 includes noise control modules 80, 80', 180, 280, 380, and 980 configured to perform at least one of i) a first function of reducing the level of noise in a relatively low frequency range among audible frequencies and ii) a second function of increasing the level of noise in a relatively high frequency range among audible frequencies. The noise control module may include speakers 89 and 989. In some embodiments, the cleaner 1 may further include a sound transmission tube 90 configured to transmit sound of the speakers 89 and 989 to sound outlets 10b and 10b'.

Referring to FIG. 1, the nozzle module 70 may include a suction nozzle 71 for sucking in outside air, and an extension tube 73 that is elongated from the suction nozzle 71. The extension tube 73 connects the suction nozzle 71 and the suction tube 11. The extension tube 73 guides the air, drawn in through the suction nozzle 71, to flow into a suction flow path P1. One end of the extension tube 73 may be detachably coupled to the suction tube 11 of the main body 10. A user may perform cleaning while holding the handle 30 and moving the suction nozzle 71 when the suction nozzle 71 is placed on the ground.

Referring to FIGS. 2 to 6, the main body 10 forms the exterior of the cleaner 1. The main body 10 may have a generally cylindrical shape that is elongated in the up-down direction. The dust collector 20 is accommodated in the main body 10. The fan modules 50 and 50' are accommodated in the main body 10. The main body 10 may include the suction tube 11 for guiding air to be drawn into the main body 10. The suction tube 11 forms the suction flow path P1. The suction tube 11 may protrude forward from the main body 10. In addition, the handle 30 is coupled in the opposite direction of the suction tube 11 with respect to the main body 10. In addition, the battery Bt for supplying power to the fan modules 50 and 50' may be mounted under the handle 30.

The main body 10 includes discharge covers 12 and 12' forming exhaust outlets 10a and 10a'. The discharge covers 12 and 12' may form an upper surface of the main body 10. The discharge covers 12 and 12' cover an upper portion of a fan module housing 14.

The main body 10 include a dust collector 13 storing dust separated by the dust separator 20. At least a portion of the dust separator 20 may be disposed in the dust collector 13. An inner surface of an upper portion of the dust collector 13 may function as a first cyclone part 21 (in this case, the upper part of the dust collector 13 may be referred to as the first cyclone part 21) which will be described later. A second cyclone part 22 and a dust flow guide 24 are disposed in the dust collector 13.

The dust collector 13 may have a cylindrical shape. The dust collector 13 may be disposed under the fan module housing 14. Dust storage spaces S1 and S2 are formed in the dust collector 13. A first storage space S1 is formed between the dust collector 13 and the dust flow guide 24. A second storage space S2 is formed in the dust flow guide 24.

The main body 10 includes the fan module housing 14 accommodating the fan modules 50 and 50' therein. The fan module housing 14 may extend upward from the dust collector 13. The fan module housing 14 has a cylindrical shape. An extension portion 31 of the handle 30 is disposed on the opposite side of the suction tube 11 with respect to the fan module housing 14.

The main body 10 includes a dust cover 15 for opening and closing the dust collector 13. The dust cover 15 may be rotatably coupled to a lower side of the dust collector 13. The dust cover 15 may open and close the lower side of the dust collector by rotation. The dust cover 15 may include a hinge (not shown) for rotation. The hinge may be first coupled to the dust collector 13. The dust cover 15 may open or close the first storage space S1 and the second storage space S2 together.

The main body 10 includes an air guide 16 for guiding the air leaked from the dust separator 20. The air guide 16 forms fan module flow paths P4 and P4' for guiding the air from the dust separator 20 to an impeller 52. The air guide 16 includes exhaust flow paths P5 and P5' for guiding the air, having passed through the impeller 52, to the exhaust outlets 10a and 10a'. The air guide 16 may be disposed in the fan module housing 14.

Meanwhile, the fan module 50 includes the impeller 52, a suction motor 51 for rotating the impeller, and a shaft 53 for coupling the suction motor 51 and the impeller 52. A direction of the flow path of air drawn in by the fan module 50 is determined based on position and direction of the impeller 52 disposed in the fan module 50.

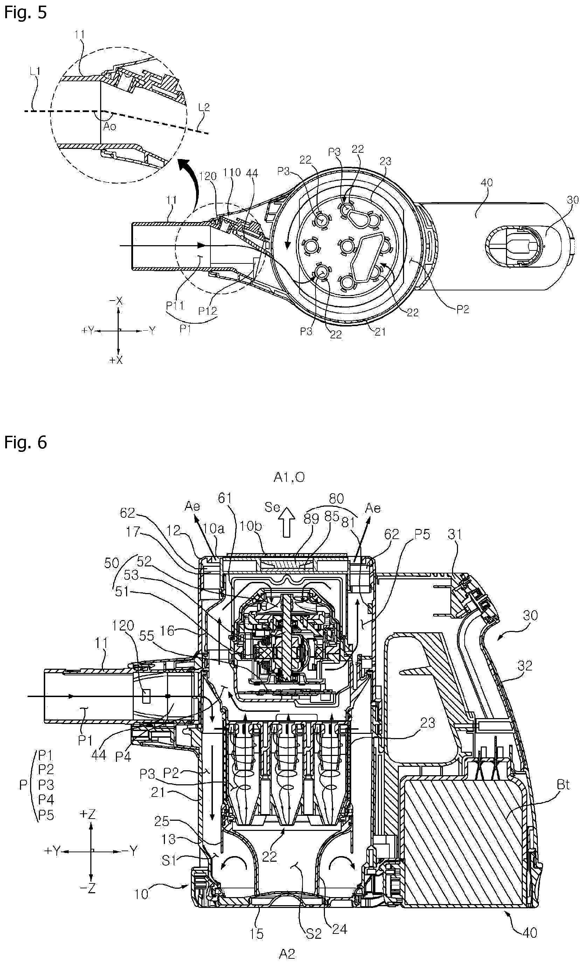

For example, referring to FIGS. 6A to 6C, when an inlet of the impeller 52 is installed in a direction opposite to the suction motor 51 above the suction motor 51, the flow paths P4 and P5 may be formed so that the air leaked from the dust separator 20 rises and then falls while passing through the impeller 52, and rises again to the exhaust outlets 10a and 10a'.

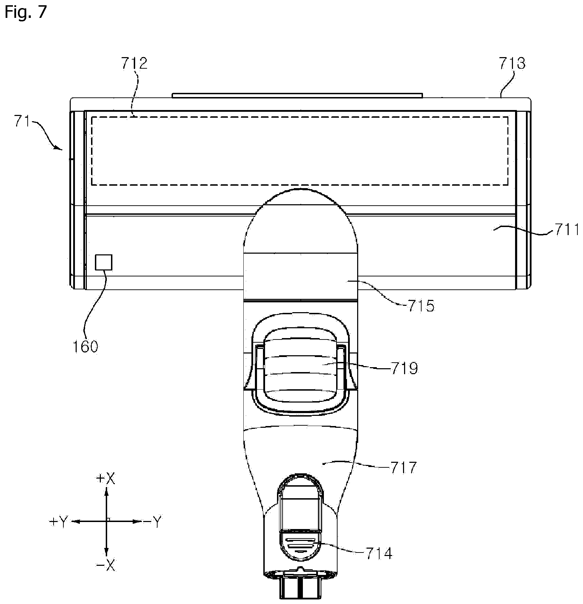

In another example, referring to FIG. 7, when the inlet of the impeller 52 is installed in a direction opposite to the suction motor 51 under the suction motor 51, the flow paths P4' and P5' may be formed so that the air leaked from the dust separator 20 continuously rises to the exhaust outlets 10a and 10a' while passing through the impeller 52.

In addition, when the inlet of the impeller 52 is installed to face the motor, the impeller 52 may be installed above the suction motor 51 in the embodiment of FIG. 7.

Referring to FIGS. 2, 4, and 6, the main body 10 has the exhaust outlets 10a and 10a' through which air in the flow path P is discharged to the outside of the main body 10. The exhaust outlets 10a and 10a' may be formed in the discharge covers 12 and 12'.

The exhaust outlets 10a and 10a' may be formed in one surface of the main body 10. The exhaust outlets 10a and 10a' may be formed in an upper surface of the main body 10. In this manner, it is possible to prevent dust around the cleaner from being scattered by the air discharged from the exhaust outlets 10a and 10a' as well as to prevent the air, discharged from the exhaust outlets 10a and 10a', from directly hitting a user. In addition, the sound outlet may be formed in the same surface as the surface in which the exhaust outlets 10a and 10a' are formed, among the surfaces of the main body 10.

The exhaust outlets 10a and 10a' may be disposed to face a specific direction (e.g., upward direction). A discharge direction Ae of the air, discharged through the exhaust outlets 10a and 10a', may be the specific direction.

Referring to FIGS. 5 and 6, the dust separator 20 performs the function of filtering dust in the flow path P. The dust separator 20 separates dust, drawn into the main body 10 through the suction tube 11, from the air.

For example, the dust separator 20 may include a first cyclone part 21 and a second cyclone part 22 capable of separating dust by cyclone flow. A flow path P2 formed by the first cyclone part 21 may be connected to the suction flow path P1 formed by the suction tube 11. Air and dust sucked through the suction tube 11 may spirally flow along an inner circumferential surface of the first cyclone part 21.

An axis A2 of the cyclone flow of the first cyclone part 21 may extend vertically. The axis A2 of the cyclone flow may coincide with an axis O. The second cyclone part 22 further separates dust from the air having passed through the first cyclone part 21. The second cyclone part 22 may be located inside the first cyclone part 21. The second cyclone part 22 may be located inside a boundary portion 23. The second cyclone part 22 may include a plurality of cyclone bodies which are arranged in parallel.

In another example, the dust separator 20 may also have a single cyclone part. Even in this case, the axis A2 of the cyclone flow may extend vertically.

In yet another example, the dust separator 20 may include a main filter unit (not shown) instead of the cyclone part. The main filter unit may separate dust from the air drawn in through the suction tube 11.

Hereinafter, the following description will be made of an example in which the dust separator 20 includes a first cyclone part 110 and a second cyclone part 130, but the dust separator 20 is not necessarily limited thereto.

The dust separator 20 forms dust separation airflow paths P2 and P3. Dust is separated from the air as the air moves at high speed through the dust separation airflow paths P2 and P3, and the separated dust is stored in the first storage space S1.

A space between an inner circumferential surface of the first cyclone part 21 and an outer circumferential surface of the boundary portion 23 is the flow path P2 of the first cyclone. The air having passed through a suction flow path P1 moves in the downward spiral direction in the flow path P2 of the first cyclone, and the dust in the air is centrifuged. Here, the axis A2 is the axis A2 of the flow in the downward spiral direction.

The dust separator 20 includes the boundary portion 23 having a cylindrical shape and disposed inside the first cyclone part 21. The boundary portion 23 has a plurality of holes formed in the outer circumferential surface. The air in a first cyclone flow path P2 may pass through the plurality of holes of the boundary portion 23 and may flow into a second cyclone flow path P3. Bulky dust may also be filtered by the plurality of holes of the boundary portion 23.

An upper portion of the second cyclone part 22 is disposed inside the boundary portion 23. The second cyclone part 22 includes a plurality of cyclone bodies having an empty interior and being open from top to bottom. Each cyclone body may be formed in a pipe shape that tapers downward. The second cyclone flow path P3 is formed inside each cyclone body. The air having passed through the boundary portion 23 moves to the second cyclone flow path P3 along a guide for inducing airflow in a downward spiral direction, the guide disposed on the upper side of the cyclone body. The air moves spirally downward along the inner peripheral surface of the cyclone body, and dust in the air is centrifuged and the separated air is stored in a second storage space S2. The air that has moved along the second cyclone flow path P3 to a lower side of the cyclone body moves upward along the central axis in the vertical direction of the second cyclone flow path P3, and flows into the fan module flow paths P4 and P4'.

The dust separator 20 includes the dust flow guide 24 dividing the first storage space S1 and the second storage space S2 in the dust collector 13. A space between the dust flow guide 24 and an inner surface of the dust collector 13 is the first storage space S1. An inner space of the dust flow guide 24 is the second storage space S2.

The dust flow guide 24 is coupled to a lower side of the second cyclone part 22. The dust flow guide 24 contacts an upper surface of the dust cover 15. A portion of the dust flow guide 24 may have a diameter that decreases from top to bottom. For example, an upper portion of the dust flow guide 24 may have a diameter that decreases toward the bottom, and a lower portion of the dust flow guide 24 may have a cylindrical shape that extends vertically.

The dust separator 20 may include a scattering prevention rib 25 that extends downward from an upper end thereof. A circumference of the upper portion of the dust flow guide 24 may be surrounded. The scattering prevention rib 25 may extend in a circumferential direction about the axis A2 of flow. For example, the scattering prevention rib 25 may have a cylindrical shape.

In the case where the upper portion of the dust flow guide 24 has a diameter that decreases toward the bottom, a space is formed between an outer peripheral surface of the upper portion of the dust flow guide 24 and the scattering prevention rib 25. When air rises along the dust flow guide 24 in the first storage space S1, dust that rises is caught by the space between the scattering prevention rib 25 and the upper portion of the dust flow guide 24. In this manner, it is possible to prevent the dust in the first storage space S1 from flowing backward in an upward direction.

The handle 30 is coupled to the main body 10. The handle 30 may be coupled in a direction opposite to the suction tube 11 with respect to the main body 10. The handle 30 may be coupled to an upper portion of the battery housing 40.

The handle 30 may include an extension portion 31 protruding rearward from the main body 10. The extension portion 31 may extend forward from the upper side of an additional extension portion 32. The extension portion 31 may extend horizontally. In embodiment B which will be described later, the speaker 989 is disposed inside the extension portion 31.

The handle 30 extends vertically and includes the additional extension portion 32. The additional extension portion 32 may be spaced apart from the main body 10 in a front-rear direction. A user may use the cleaner 1 while holding the additional extension portion 32. An upper end of the additional extension portion 32 is connected to a rear end of the extension portion 31. A lower end of the extension portion 32 is connected to the battery housing 40.

The additional extension portion 32 is provided with a stopper 32a for preventing a user's hand holding the additional extension portion 32 from moving in the longitudinal direction (vertical direction). The stopper 32a may protrude forward from the additional extension portion 32.

The stopper 32a is vertically spaced apart from the extension portion 31. While a user holds the additional extension portion 32, some fingers of the user's hand holding the portion are located over the stopper 312, and the other fingers are located under the stopper 312.

The handle 30 may include an inclined surface 33 facing a direction between an upper side and a rear side. The inclined surface 33 may be located at the rear of the extension portion 31. An input unit 3 may be disposed on the inclined surface 33.

The battery Bt may supply power to the fan modules 50 and 50'. The battery Bt may supply power to the noise control module. The battery Bt may be detachably disposed inside the battery housing 40.

The battery housing 40 may be coupled to a rear side of the main body 10. The battery housing 40 is disposed under the handle 30. The battery Bt is accommodated in the battery housing 40. A heat dissipation hole for discharging heat generated from the battery Bt to the outside may be formed in battery housing 40.

Referring to FIG. 6, the cleaner 1 may include a pre-filter 61 filtering air before air is introduced into the suction motor 51. The pre-filter 61 may be disposed to surround the impeller 52. Air in the fan module flow paths P4 and P4' may pass through the pre-filter 61 to reach the impeller 52. The pre-filter 61 may be disposed inside the main body 10. The pre-filter 61 may be disposed under the discharge covers 12 and 12'. By separating the discharge covers 12 and 12' from the cleaner 1, a user may remove the pre-filter 61 from the inside of the main body 10.

The cleaner 1 may include a HEPA (high efficiency particulate air) filter 62 filtering air before the air is discharged through the exhaust outlets 10 and 10a'. The air having passed through the impellers 52 and 52' passes through the HEPA filter 62 to be discharged to the outside through the exhaust outlet 10a. The HEPA filter 62 is disposed in the exhaust flow path P5.

The discharge covers 12 and 12' may include a filter accommodation space (not shown) for accommodating the HEPA filter 62. The filter accommodation space is formed with an open bottom, such that the HEPA filter 62 may be accommodated in the filter accommodation space under the discharge covers 12 and 12'.

The exhaust outlet 10a may be formed to face the HEPA filter 62. The HEPA filter 62 may be disposed under the exhaust outlets 10a and 10a'. The HEPA filter 62 may extend circumferentially along the exhaust outlets 10a and 10a'.

The main body 10 includes a filter cover 17 covering a lower surface of the HEPA filter 62. When the HEPA filter 62 is accommodated in the filter accommodation space, the lower surface of the HEPA filter 62 is covered by the filter cover 17, and the filter cover 17 has a hole through which air in the exhaust flow path P5 passes. The filter cover 17 may be removably coupled to the discharge covers 12 and 12'.

The discharge covers 12 and 12' may be removably coupled to the fan module housing 14. By removing the filter cover 17 from the discharge covers 12 and 12' separated from the fan module housing 14, the HEPA filter 62 may be withdrawn from the filter accommodation space.

In the present disclosure, the cleaner 1 includes the pre-filter 61 and the HEPA filter 62, but the type and number of filters are not limited thereto.

Meanwhile, the input unit 3 may be disposed on the opposite side of the stopper 32a with respect to the handle 30. The input unit 3 may be disposed on the inclined surface 33.

In addition, the output unit 4 may be disposed on the extension portion 31. For example, the output unit 4 may be disposed on a top surface of the extension portion 31. The output unit 4 may include a plurality of emission units 111. The plurality of emission units 111 may be spaced apart from each other in the longitudinal direction (front-rear direction) of the extension portion 31.

Meanwhile, referring to FIGS. 5 and 6, the flow path P is formed by sequentially connecting the suction flow path P1, the dust separation flow paths P2 and P3, the fan module flow paths P4 and P4', and the exhaust flow paths P5 and P5'.

Particularly referring to FIG. 5, the suction flow path P1 provides outside air to the dust separator 20. The suction flow path P1 is connected to the dust separator 20. Specifically, the suction flow path P1 may be defined by the suction tube 11, and a portion of the suction flow path P1 is exposed to the outside of the main body 10, and another side of the suction flow path P1 may be disposed inside the main body 10. One side of the suction flow path P1 may be coupled to the extension tube 73 connected to the suction nozzle 71. Air in the suction flow path P1 is moved by the fan module.

The suction flow path may include a first suction flow path P11 extending in a first direction, and a second suction flow path P12 connecting the first suction flow path P11 and the dust separator 20 and extending in a second direction forming an obtuse angle with the first direction.

The first suction flow path P11 may be in the shape of a straight line extending in the first direction. Specifically, the suction tube 11 defining the first suction flow path P11 may be a straight pipe extending in the first direction. At least a portion of the first suction flow path P11 is exposed to the outside of the main body 10. An extension line in the first direction meets a rotational axis (axis A2 of the cyclone flow) of the fan module.

One end of the second suction flow path P12 is connected to the first suction flow path P11, and another end thereof is connected to the dust separator 20. The second suction flow path P12 communicates with the dust separation flow path P2 of the dust separator 20. The second flow path P12 is located inside the main body 10.

The second suction flow path P12 changes the direction of the introduced air and reduces the flow rate of the introduced air so that the air entering the dust separator 20 performs a cyclone movement around the axis A2 of the cyclone flow.

Specifically, the second suction flow path P12 may extend in a second direction L2 forming an obtuse angle with a first direction L1. The second suction flow path P12 may have a straight-line or a curved-line shape. It is desirable that an angle A0 formed by the first suction flow path P11 and the second suction flow path P12 ranges from 150 degrees to 170 degrees. The first direction is a front-rear direction, and the angle A0 formed by the first suction flow path P11 and the second suction flow path P12 is an angle measured on the front, rear, right and left planes.

The first suction flow path P11 is a passage for introducing dust and air sucked from the suction nozzle 71 into the dust separator 20. The air moving through the first suction flow path P11 is required to maintain a flow rate at which dust and air do not flow backward in the middle of the movement.

The first suction flow path P11 may be defined as a region with a fastest flow rate in the suction tube 11. Further, the first suction flow path P11 may be defined as a region with a relatively faster flow rate than other regions in the suction tube 11.

The second suction flow path P12, which forms a primary cyclone entrance at the end of the first suction flow path P11 through the outer wall of the suction tube 11 and a flap door 44 may be defined as a region with a slower flow rate in the suction tube 11 than that in the first suction flow path P11.

The suction tube 11 is provided with the flap door 44 opening and closing the suction tube 11. The flap door 44 is rotatably installed in the second suction flow path P12 and opens and closes the suction flow path according to the pressure in the second suction flow path P12.

Air and dust sucked through the suction flow path P1 by the operation of the suction motor 51 are separated from each other while flowing in the first flow path P2 and the second cyclone flow path P3. In the second cyclone flow path P3, air moves upward as described above, and flows into the fan module flow paths P4 and P4'.

The fan module flow paths P4 and P4' guide air toward the pre-filter 61. The air having sequentially passed through the pre-filter 61 and the impeller 52 flows into the exhaust outlets P5 and P5'. The air in the exhaust outlets P5 and P5' passes through the HEPA filter 62, and then is discharged to the outside through the exhaust outlets 10a and 10a'.

For example, referring to FIG. 6, the fan module flow path P4 guides the air, discharged from the dust separator 24, to rise and then fall while passing through the impeller 52. Here, the exhaust flow path P5 guides the air, which falls while passing through the impeller 52, to rise again to the exhaust outlets 10a and 10a'.

In the present disclosure, a dust sensor 110 may be mounted. The dust sensor 110 measures the concentration of dust in the suction flow path.

In addition, the present disclosure may further include an acceleration sensor 160.

Hereinafter, the acceleration sensor 160 and the suction nozzle 71 will be described in detail.

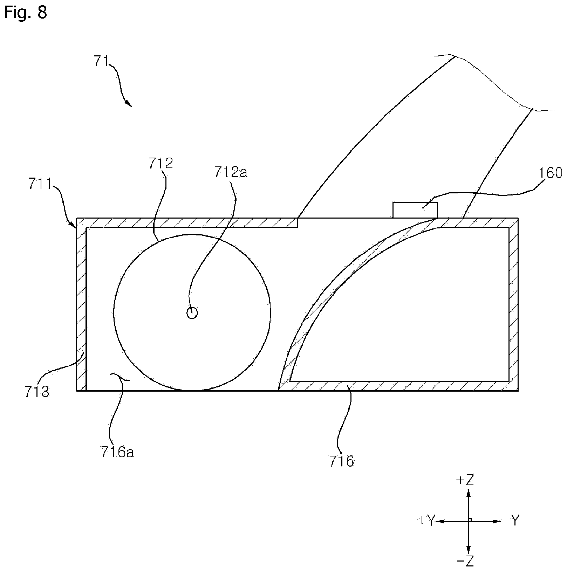

Referring to FIG. 8, the suction nozzle 71 includes a nozzle housing 711 and a brush 712. The nozzle housing 711 has a suction port 716a, and outside air is drawn into the nozzle housing 711 through the suction port 716a.

The suction port 716a is formed by vertically penetrating a lower surface 716 of the suction nozzle 71. Specifically, the suction port 716a may be formed by vertically penetrating the lower surface 716 of the nozzle housing 711.

The brush 712 is rotatably installed in the nozzle housing 711. The brush 712 sweeps up foreign substances and pushes out the foreign substances toward the extension tube 73. The brush 712 is rotated by the torque of the brush motor 718.

The nozzle housing 711 is connected to the extension tube 73 by a connection tube 715. One side of the connection tube 715 is connected to the nozzle housing 711, and another side of the connection tube 715 is connected to the extension tube 73.

A detachment button 714 for mechanical coupling with the extension tube 73 may be provided in the connection tube 120. By operating the detachment button 714, a user may couple or separate the connection tube 715 and the extension tube 73.

The connection tube 715 may be rotatably connected to the nozzle housing 711. Specifically, the connection tube 715 may be hingedly coupled to the connection member so as to be vertically rotatable.

The acceleration sensor 160 is installed on the suction nozzle 71. Specifically, the acceleration sensor 160 is installed on the nozzle housing 711. The acceleration sensor 160 may be installed on a top surface of the nozzle housing 711 so as not to obstruct contact of the suction nozzle 71 with the floor.

The acceleration sensor 160 may have an acceleration sensing function for the three axes that are orthogonal to each other in the spatial coordinate system. A predetermined processing module may integrate the acceleration to calculate the velocity and the velocity may be integrated to calculate a moving distance.

In addition, the acceleration sensor 160 measures the x-axis acceleration, the y-axis acceleration, and the z-axis acceleration, and provides the measured accelerations to a controller 1800. The x-axis acceleration represents movement of the suction nozzle 71 in the front-rear direction, the y-axis acceleration represents movement of the suction nozzle 71 in the left-right direction, and the z-axis acceleration represents movement of the suction nozzle 71 in the up-down direction.

Here, the y-axis is a direction parallel to a direction of a rotating shaft 712a of the brush 712, the x-axis is a direction orthogonal to the y-axis, and the z-axis is a direction orthogonal to the x-axis, the y-axis, and the lower surface 716 of the suction nozzle 71.

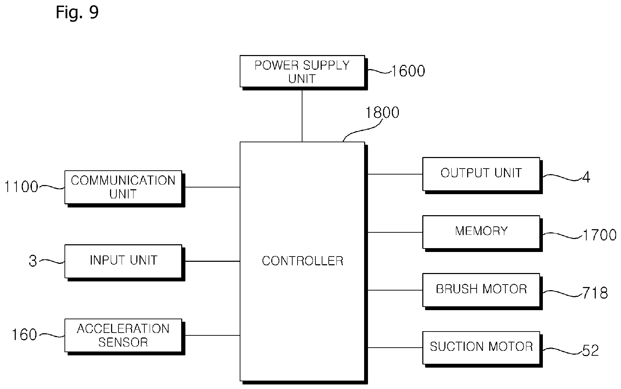

**Hereinafter, exemplary control components of the cleaner 1 will be described with reference to** **FIG. 9****.**

Referring to FIG. 9, the cleaner 1 according to an embodiment of the present disclosure may include at least one of a communication unit 1100, an input unit 3, an output unit 4, a power supply unit 1600, a memory 1700, a controller 1800, an acceleration sensor 160, a brush motor 718, and a suction motor 51, or a combination thereof.

In this case, the components illustrated in FIG. 9 are not essential, such that it is obvious that a cleaner having more components or fewer components may be implemented.

Hereinafter, each of the above components will be described. First, the power supply unit 1600 is provided with a battery that may be charged by an external commercial power source to supply power into the cleaner. The power supply unit 1600 may supply driving power to each of the components included in the cleaner to supply operation power required to drive the cleaner or perform a specific function.

In this case, the controller 1800 may detect the remaining power of the battery, and when the remaining power is insufficient, the controller 1800 may perform control to move to a charging station connected to the external commercial power source, and receive a charging current from the charging station to charge the battery. The battery may be connected to a battery detection unit to transmit the remaining power of the battery and the state of charge to the controller 1800. The output unit 4 may be controlled by the controller 1800 to display the remaining power of the battery on the output unit 4.

The controller 1800 performs an information processing function based on artificial intelligence technology, and may include at least one module for performing at least one of learning of information, reasoning of information, perception of information, and processing of natural language.

The controller 1800 may use machine running technology to perform at least one of learning, reasoning, and processing of a vast amount of information (big data), such as information stored in the cleaner, environment information around a mobile terminal, or information stored in a communicable external storage.

Further, the controller 1800 may use information learned using machine learning technology to predict (or infer) at least one executable operation of the cleaner, and may control the cleaner to execute the most feasible one of at least one predicted operation. Machine learning technology is a technology for collecting and learning large-scale information based on at least one algorithm, and determining and predicting information based on the learned information.

Information learning is an operation for quantifying the relationship between information and information by grasping the characteristics, rules, and criteria of determination of information, and predicting new data using the quantified pattern.

In addition, the controller 1800 outputs information, provided by sensors included in the cleaner, through the output unit 4.

Meanwhile, the input unit 3 receives various control commands for the cleaner from a user. The input unit 3 may include one or more buttons.

In addition, the input unit 3 may be installed as a hard key, a soft key, a touchpad, and the like on a top portion of the main body 10. Further, the input unit 3 may have the form of a touch screen together with the output unit 4. The input unit 3 may receive a control command for the brush motor 718 and/or a control command for the suction motor 51 from a user.

Meanwhile, the output unit 4 may be installed on a top portion of the cleaner. Obviously, the installation location and type may vary. For example, the output unit 4 may display a battery state, a state of the brush motor 718, a state of the suction motor 51, a current state of the suction nozzle 71, and the like on a screen.

The output unit 4 may be formed of any one element of a light-emitting diode (LED), a liquid crystal display (LCD), a plasma display panel, and an organic light-emitting diode (OLED).

The output unit 4 may further include a sound output unit for aurally outputting an operation process of the cleaner performed by the controller 1800 or an operation result thereof. For example, the output unit 4 may output a warning sound to the outside according to a warning signal generated by the controller 1800.

In this case, the sound output unit (not shown) may be a unit for outputting sound such as a beeper, a speaker, etc., and the output unit 4 may output audio data, message data, or the like which has a predetermined pattern stored in the memory 1700 to the outside through the sound output unit.

The memory 1700 stores a control program for controlling or driving the cleaner and data corresponding thereto. The memory 1700 may store audio information, image information, obstacle information, location information, map information, and the like. In addition, the memory 1700 may store information related to a traveling pattern.

A non-volatile memory is mainly used as the memory 1700. Here, the non-volatile memory (NVM, NVRAM) is a storage device capable of maintaining stored information even when power is not supplied, and examples thereof may include read-only memory (ROM), flash memory, magnetic computer memory (e.g., hard disk, diskette drive, magnetic tape), optical disk drive, magnetic RAM, PRAM, or the like.

Meanwhile, the communication unit 1100 is connected to a terminal device and/or another device located in a specific region (in the present specification, it will be used interchangeably with the term "home appliance") through one of wired, wireless, and satellite communication methods to transmit and receive signals and data.

The communication unit 1100 may transmit and receive data to and from the other device located within a specific region. In this case, the other device may be any device capable of transmitting and receiving data through the connection to a network, and for example, may be an air conditioner, a heating device, an air purification device, a lamp, a TV, or a car. In addition, the other device may be devices for controlling doors, windows, water valves, gas valves, and the like. In addition, the other device may be a sensor for detecting temperature, humidity, atmospheric pressure, gas, and the like.

The brush motor 718 provides torque to the brush 712 to rotate the brush 712.

The controller 1800 may determine a stop motion of the suction nozzle 71 based on a variation of an x-axis acceleration provided by the acceleration sensor 160 and a sum of variations of accelerations which is obtained by summing variations of x-, y-, and z-axis accelerations provided by the acceleration sensor 160, and may control the brush motor 718, the suction motor 51, and the power supply unit.

Further, the controller 1800 may determine a stop motion of the suction nozzle 71 based on a variation of an x-axis acceleration provided by the acceleration sensor 160 and a sum of variations of accelerations which is obtained by summing variations of x-, y-, and z-axis accelerations provided by the acceleration sensor 160, and may turn off at least one of the brush motor 718, the suction motor 51, and the power supply unit.

Accordingly, in the present disclosure, by reflecting a user's intention during cleaning, the suction motor 51 and the brush motor 718 may be temporarily stopped when it is necessary to temporarily stop the suction motor 51 and the brush motor 718, and the cleaner may be turned off when it is necessary to turn off the power of the cleaner, such that when the user performs an action other than cleaning, such as moving an object and the like, during cleaning, it is not required to control the cleaner, thereby improving user convenience and increasing the usage time of the cleaner.

The controller 1800 may control a rotation speed of the brush 712 based on a variation of an x-axis acceleration provided by the acceleration sensor 160 and a sum of variations of accelerations which is obtained by summing variations of x-, y-, and z-axis accelerations provided by the acceleration sensor 160.

Accordingly, in the present disclosure, by controlling the rotation speed of the brush 712 by reflecting a user's intention during cleaner, it is possible to identify when a user wants to increase the speed of the brush 712, thereby reducing the energy consumption of the cleaner, and allowing efficient cleaning.

In addition, the controller 1800 may determine a state of the nozzle based on the variations of the x-, y-, and z-axis accelerations provided by the acceleration sensor 160, and may control the rotation speed of the brush 712 and the rotation speed of the suction motor 51 based on the state of the nozzle.

Accordingly, in the present disclosure, a lifted state or an overturned state of the suction nozzle 71 during cleaning may be identified, and when the suction nozzle 71 is in a lifted state, the brush motor 718 and/or the suction motor 51 is stopped, thereby protecting a user from being injured when the user's finger or the like is caught in the suction part of the suction nozzle 71.

In addition, in the present disclosure, a lifted state or an overturned state of the suction nozzle 71 during cleaning may be identified, and when the suction nozzle is in a lifted state, the brush motor 718 and/or the suction motor 51 is stopped, thereby reducing energy by stopping the motor when the suction nozzle 71 does not perform its function, and increasing the operating time of the cleaner.

In the present disclosure, by determining a tilt state of the suction nozzle during cleaning, and by stopping the brush motor 718 and/or the suction motor 51 or reducing the speed of the brush motor 718 and/or the suction motor 51 based on a degree of tilt, a user's risk of injury may be reduced, and the waste of energy may be reduced.

Hereinafter, the determining of a stop motion of the suction nozzle 71 and a method of controlling the cleaner based on the determination will be described.

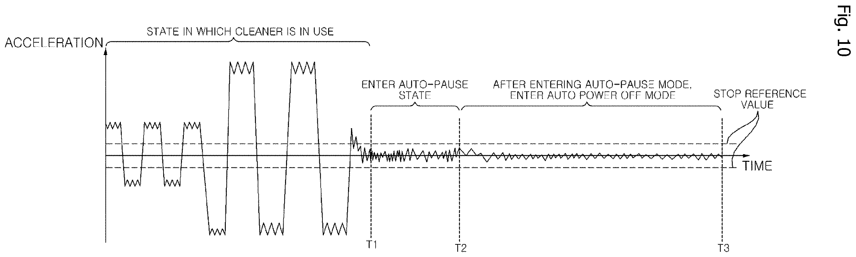

Referring to FIG. 10, if a variation of an x-axis acceleration (hereinafter referred to as an x-axis acceleration variation) is greater than or equal to a first stop reference value, and a sum of variations of accelerations (hereinafter referred to as a sum of acceleration variations) is greater than or equal to a second stop reference value, the controller 1800 determines a stop motion of the suction nozzle 71. The stop motion of the suction nozzle 71 refers to a state in which a user stops the suction nozzle 71 during cleaning without moving the suction nozzle 71.

Here, the sum of variations of accelerations may be defined as a value obtained by summing the variations of the provided x-, y-, and z-axis accelerations and then finding the square root of the sum. The acceleration variation is a variation in acceleration per unit time. If the acceleration variation is small, this indicates that a user does not move the suction nozzle 71, such that the cleaner is temporarily stopped or the power of the cleaner is turned off according to the user's intention.

The variations of the x-, y-, and z-axis accelerations are absolute values and include variations of the +x, +y, and +z axis accelerations and variations of the -x, - y, and -z axis accelerations.

The acceleration variation is a variation in acceleration per unit time. If the acceleration variation is small, this indicates that a user does not move the suction nozzle 71, such that the cleaner is temporarily stopped or the power of the cleaner is turned off according to the user's intention.

Specifically, the controller 1800 may determine a stop motion of the suction nozzle 71 based on the variation of acceleration provided by the acceleration sensor, and if the stop motion of the suction nozzle 71 is maintained for a first period of time (or more), the controller 1800 turns off the brush motor 718 and the suction motor 51.

The first period of time is a value set to be smaller than a second period of time. If a user stops the suction nozzle 71 when moving an object and the like, and if the state is maintained for the first period of time, the controller 1800 turns off the brush motor 718 and the suction motor 51 to enter an auto-pause state.

Obviously, if the stop motion of the suction nozzle 71 is maintained for the first period of time (or more), the controller 1800 may turn off the brush motor 718 and the suction motor 51 and may output an auto-pause state to the output unit.

In addition, if the stop motion of the suction nozzle 71 is maintained for the second period of time (or more), the controller 1800 turns off the power supply unit. If a user stops moving the suction nozzle 71 for a short period of time, the controller 1800 may turn off only the brush motor 718 and the suction motor 51, and if the user stops moving the suction nozzle 71 for a long period of time, the controller 1800 may turn off the power supply unit to turn off the power of the whole cleaner.

Obviously, if the stop motion of the suction nozzle 71 is maintained for the first period of time, the controller 1800 may turn off the brush motor 718 and the suction motor 51, and if the stop motion of the suction nozzle 71 is maintained for the second period of time greater than the first period of time, the controller 1800 may turn off the power supply unit.

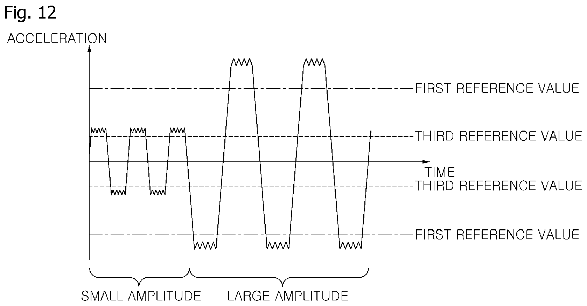

Referring to FIG. 12, if an x-axis acceleration variation is greater than or equal to a first reference value, the controller 1800 may change a rotation speed of the brush 712 to a high speed. Here, the first reference value is a predetermined value.

If the x-axis acceleration variation is large, this indicates that a user rapidly moves the suction nozzle 71 forward and backward, such that by changing the rotation speed of the brush 712 to a high speed, high cleaning force may be provided according to the user's intention.

Specifically, if the x-axis acceleration variation is greater than or equal to the first reference value, the controller 1800 may change a rotation speed of the brush 712 to a high speed. Here, the high rotation speed of the brush motor 718 and the brush 712 refers to any rotation speed higher than low and medium speeds which will be described later. If the speed of the brush motor 718 is already high when the controller 1800 is to change the speed of the brush motor 718 to a high speed, high speed is maintained.

Here, the case where the acceleration variation is greater than or equal to a reference value indicates that the acceleration variation is greater than or equal to the reference value at least once or a number of times within a unit time.

Obviously, the controller 1800 may display a current state through the output unit 4. Specifically, if the x-axis acceleration variation is greater than or equal to the first reference value, the controller 180 may display that the brush 712 rotates at a high speed on the output unit 4.

In addition, if the x-axis acceleration variation is greater than or equal to the first reference value, the controller 1800 changes the speed of the suction motor 51 to a high speed. Here, the high rotation speed of the suction motor 51 and the brush 712 refers to any rotation speed higher than low and medium speeds which will be described later. If the speed of the suction motor 51 is already high when the controller 1800 is to change the speed of the suction motor 51 to a high speed, high speed is maintained.

If the x-axis acceleration variation is greater than or equal to the first reference value, the controller 1800 may display that the suction motor 51 rotates at a high speed on the output unit 4.

If the x-axis acceleration variation is smaller than the first reference value and greater than or equal to a third reference value, the controller 1800 may change the rotation speed of the brush 712 to a medium speed. Specifically, if the x-axis acceleration variation is smaller than the first reference value and greater than or equal to the third reference value, the controller 1800 changes the speed of the brush motor 718 to a medium speed. If the speed of the brush motor 718 is already medium when the controller 1800 is to change the speed of the brush motor 718 to a medium speed, medium speed is maintained.

Obviously, if the x-axis acceleration variation is smaller than the first reference value and greater than or equal to the third reference value, the controller 1800 may display that the brush 712 rotates at a medium speed on the output unit 4.

If the x-axis acceleration variation is smaller than the first reference value and greater than or equal to the third reference value, the controller 1800 may change the rotation speed of the brush 172 to a medium speed. Specifically, if the x-axis acceleration variation is smaller than the first reference value and greater than or equal to the third reference value, the controller 1800 changes the speed of the suction motor 51 to a medium speed. If the speed of the suction motor 51 is already medium when the controller 1800 is to change the speed of the suction motor 51 to a medium speed, medium speed is maintained.

Obviously, if the x-axis acceleration variation is smaller than the first reference value and greater than or equal to the third reference value, the controller 1800 may display that the brush 712 rotates at a medium speed on the output unit 4.

If the x-axis acceleration variation is smaller than the first reference value and greater than or equal to the third reference value, the controller 1800 determines that a user moves the suction nozzle 71 forward and backward with a medium intensity, and adjusts the speed of the brush motor 718 and the suction motor 51 based on the determination. The first reference value is a greater value than the third reference value.

If a sum of acceleration variations is greater than or equal to the second reference value, the controller 1800 may change the rotation speed of the brush 712 and/or the rotation speed of the suction motor 51 to a high speed. In addition, if the sum of variations of accelerations is greater than or equal to the second reference value, the controller 1800 may change the rotation speed of the suction motor 51 to a high speed.

Accordingly, the controller 1800 may identify a user's intention not by detecting the forward and backward movement of the suction nozzle 71, but by comprehensively considering movement along three axes, thereby further improving user convenience.

That is, in the present disclosure, by obtaining the sum of variations of three-axis accelerations, various control operations may be performed based on the obtained value. Accordingly, when a user rapidly moves the suction nozzle 71 not only in the front-rear direction, but also in the left-right direction and the vertical direction, suction force may increase.

Obviously, if the sum of acceleration variations is greater than or equal to the second reference value, and the x-axis acceleration variation and the y-axis acceleration variation are greater than the z-axis acceleration variation, the controller 1800 may change the rotation speed of the brush 712 and/or the rotation speed of the suction motor 51 to a high speed. Only when vertical movement is smaller than horizontal movement, the controller 1800 determines that a user wants to increase the cleaning force and may provide high cleaning force.

Meanwhile, by considering both the x-axis acceleration variation and the sum of acceleration variations at the same time, a user's intention or movement may be identified more accurately.

For example, if the x-axis acceleration variation is greater than or equal to the first reference value, or if the sum of acceleration variations is greater than or equal to the second reference value, the controller 1800 may change the rotation speed of the brush 712 and/or the rotation speed of the suction motor 51 to a high speed.

In addition, if vertical movement is large, this indicates that a user's intention is to check out the lower portion of the suction nozzle 71 or to finish the cleaning rather than to increase the cleaning force, such that if the x-axis acceleration variation is greater than or equal to the first reference value, or if the sum of acceleration variations is greater than or equal to the second reference value and the x-axis acceleration variation and the y-axis acceleration variation are greater than the z-axis acceleration variation, the controller 1800 may change the rotation speed of the brush 712 and/or the rotation speed of the suction motor 51 to a high speed.

If the sum of acceleration variations is smaller than the second reference value and greater than or equal to a fourth reference value, the controller 1800 may change the rotation speed of the brush 712 and/or the rotation speed of the suction motor 51 to a medium speed. Here, the second reference value is greater than the fourth reference value. Obviously, if the sum of acceleration variations is smaller than the second reference value and greater than or equal to the fourth reference value, and if the x-axis acceleration variation and the y-axis acceleration variation are greater than the z-axis acceleration variation, the controller 1800 may change the rotation speed of the brush 712 and/or the rotation speed of the suction motor 51 to a medium speed.

If the x-axis acceleration variation is smaller than the third reference value, and the sum of acceleration variations is smaller than the fourth reference value, the controller 1800 may change the rotation speed of the brush 712 and/or the rotation speed of the suction motor 51 to a low speed.

Obviously, if the x-axis acceleration variation is smaller than the third reference value, the sum of acceleration variations is smaller than the fourth reference value, and the x-axis acceleration variation and the y-axis acceleration variation are greater than the z-axis acceleration variation, the controller 1800 may change the rotation speed of the brush 712 and/or the rotation speed of the suction motor 51 to a low speed.

If the z-axis acceleration variation is greater than or equal to a fifth reference value, the controller 1800 may turn off the brush motor 718. In addition, if the z-axis acceleration variation is greater than or equal to the fifth reference value in the +z-axis direction (upward), the controller 1800 may turn off the brush motor 718. If the z-axis acceleration variation is along the +z-axis direction (upward), and the gravitational acceleration acts in the opposite direction, the controller 1800 may determine that the suction nozzle 71 is overturned.

If the z-axis acceleration variation is greater than or equal to the fifth reference value, the controller 1800 may determine that the suction nozzle 71 is lifted off the ground.

If the suction nozzle 71 is lifted off the ground and is overturned, the controller 1800 turns off the brush motor 718 to protect a user from being injured. Obviously, if the z-axis acceleration variation is greater than or equal to the fifth reference value, the controller 1800 may turn off the brush motor 718.

If the z-axis acceleration variation is smaller than the fifth reference value, the z-axis acceleration variation is greater than or equal to a sixth reference value, the x-axis acceleration variation is greater than or equal to a seventh reference value, and the y-axis acceleration variation is greater than or equal to an eighth reference value, the controller 1800 may turn off the brush motor 718.

Even when the z-axis acceleration variation is smaller than the fifth reference value, such that the controller 1800 does not determine that the suction nozzle 71 is lifted, the controller 1800 may determine tilting of the suction nozzle 71 and to stop the brush motor 718 by comprehensively considering the variations in three-axis accelerations.

Obviously, if the z-axis acceleration variation is smaller than the fifth reference value, the z-axis acceleration variation is greater than or equal to the sixth reference value, the x-axis acceleration variation is greater than or equal to the seventh reference value, and the y-axis acceleration variation is greater than or equal to the eighth reference value, the controller 1800 may turn off the suction motor 51.

The sixth reference value may be preferably set to a greater value than the seventh reference value and the eighth reference value. This is to determine tilting of the suction nozzle 71 based on acceleration in the vertical direction among the three-axis directions.

Hereinafter, a controlling method according to an embodiment will be described.

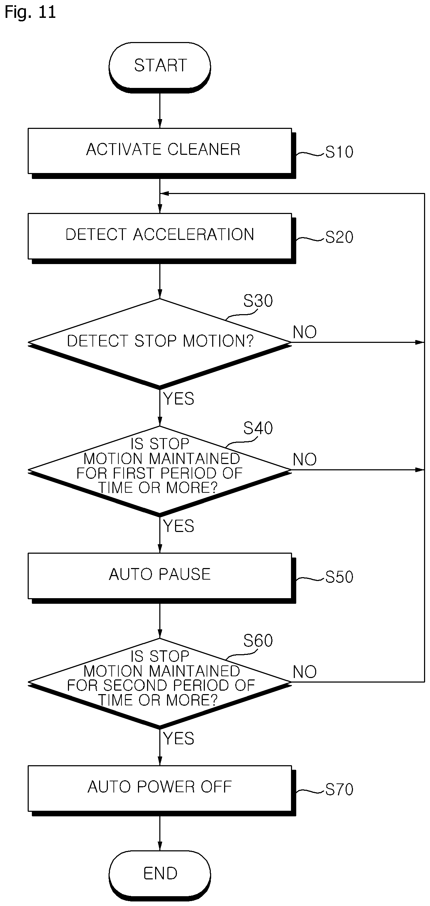

FIG. 11 is a flowchart illustrating a method of controlling a cleaner according to an embodiment of the present disclosure.

Referring to FIG. 11, the method of controlling the cleaner according to an embodiment includes a detecting operation (S20) of detecting accelerations along the three axes of the suction nozzle 71, a determining operation (S30) of determining a stop motion of the suction nozzle 71 based on the accelerations along the three axes, and a pause operation (S50) of turning off the brush motor 718 and the suction motor 51 if the stop motion is maintained for a first period of time.

In addition, if the stop motion of the suction nozzle 71 is maintained for a second period of time greater than the first period of time, the method of controlling the cleaner according to an embodiment of the present disclosure may further include a power-off operation (S70) of turning off the cleaner.

Specifically, when a user operates the cleaner, power is supplied to the cleaner (S10). The cleaner receives a user instruction to activate the cleaner. For example, when the user turns on the power of the cleaner or sets an operating speed of the suction motor 51 and/or the brush motor 718 of the cleaner, the controller 1800 activates the brush 712 and/or the suction motor 51.

Then, in the detecting operation (S20), the cleaner measures the three-axis accelerations and provides the measured accelerations to the controller 1800. Specifically, the controller 1800 controls the acceleration sensor 160 to measure the three-axis accelerations.

Subsequently, in the determining operation (S30), the controller 1800 determines the stop motion of the suction nozzle 71 based on the accelerations along the three axes. Specifically, if the x-axis acceleration variation is greater than or equal to a first stop reference value and a sum of the acceleration variations is greater than or equal to a second stop reference value, the controller 1800 determines the stop motion of the suction nozzle 71, and if not, the controller 1800 determines an operating motion of the suction nozzle 71.

The controller 1800 determines whether the stop motion of the suction nozzle 71 is maintained for the first period of time (or more) (S40).

If the stop motion of the suction nozzle 71 is maintained for the first period of time (or more), the controller 1800 turns off the brush motor 718 and the suction motor 51 (S50). That is, the controller 1800 switches the cleaner to a pause state. In this case, the controller 1800 may output the pause state of the cleaner to the output unit.

The controller 1800 determines whether the stop motion of the suction nozzle 71 is maintained for the second period of time (or more) (S60).

If the stop motion of the suction nozzle 71 is maintained for the second period of time (or more), the controller 1800 turns off the power supply unit (S70). If the power supply unit is turned off, the power of the whole cleaner is turned off. That is, the controller 1800 switches the cleaner to a power-off state.

Hereinafter, a controlling method according to another embodiment will be described.

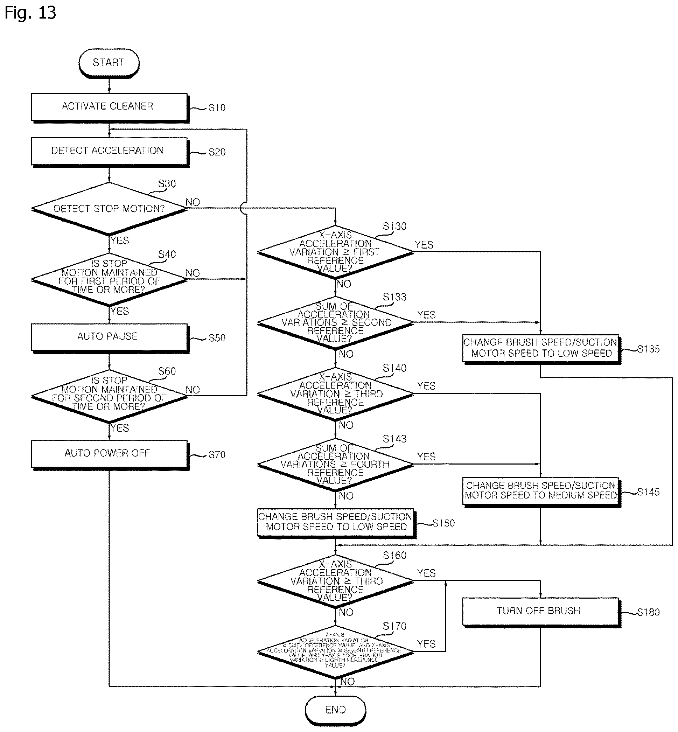

FIG. 13 is a flowchart illustrating a method of controlling a cleaner according to another embodiment of the present disclosure.

Referring to FIG. 13, when a user first operates the cleaner, power is supplied to the cleaner (S10). The cleaner is activated by receiving the user's instruction. For example, when the user turns on the power of the cleaner or sets an operating speed of the suction motor 51 and/or the brush motor 718 of the cleaner, the controller 1800 activates the brush 712 and/or the suction motor 51.

Then, in the detecting operation (S20), the cleaner measures the three-axis accelerations and provides the measured accelerations to the controller 1800. Specifically, the controller 1800 controls the acceleration sensor 160 to measure the three-axis accelerations.

Subsequently, in the determining operation (S30), the controller 1800 determines a stop motion of the suction nozzle 71 based on the accelerations along the three axes. Specifically, if the x-axis acceleration variation is greater than or equal to a first stop reference value and a sum of the acceleration variations is greater than or equal to a second stop reference value, the controller 1800 determines the stop motion of the suction nozzle 71, and if not, the controller 1800 determines an operating motion of the suction nozzle 71.

The controller 1800 determines whether the stop motion of the suction nozzle 71 is maintained for the first period of time (or more) (S40).

If the stop motion of the suction nozzle 71 is maintained for the first period of time (or more), the controller 1800 turns off the brush motor 718 and the suction motor 51 (S50). That is, the controller 1800 switches the cleaner to a pause state. In this case, the controller 1800 may output the pause state of the cleaner to the output unit.

The controller 1800 determines whether the stop motion of the suction nozzle 71 is maintained for the second period of time (or more) (S60).

If the stop motion of the suction nozzle 71 is maintained for the second period of time (or more), the controller 1800 turns off the power supply unit (S70). If the power supply unit is turned off, the power of the whole cleaner is turned off. That is, the controller 1800 switches the cleaner to a power-off state.

Upon determining that the motion of the suction nozzle 71 is not the stop motion, the controller 1800 determines whether the x-axis acceleration variation is greater than or equal to a first reference value (S130).

If the x-axis acceleration variation is greater than or equal to the first reference value, the controller 1800 changes the rotation speed of the brush 712 and/or the speed of the suction motor 51 to a high speed (S135).

If the x-axis acceleration variation is smaller than the first reference value, the controller 1800 determines whether a sum of acceleration variations is greater than or equal to a second reference value (S133).

If the x-axis acceleration variation is smaller than the first reference value, and the sum of acceleration variations is greater than or equal to the second reference value, the controller 1800 changes the rotation speed of the brush 712 and/or the rotation speed of the suction motor 51 to a high speed (S135).

If the x-axis acceleration variation is smaller than the first reference value, the controller 1800 determines whether the x-axis acceleration variation is greater than or equal to a third reference value (S140). Obviously, if the x-axis acceleration variation is smaller than the first reference value and the sum of acceleration variations is smaller than the second reference value, the controller 1800 determines whether the x-axis acceleration variation is greater than or equal to the third reference value (S140).

If the x-axis acceleration variation is smaller than the first reference value and greater than or equal to the third reference value, the controller 1800 may change the rotation speed of the brush 712 and/or the rotation speed of the suction motor 51 to a medium speed (S145). Obviously, if the x-axis acceleration variation is smaller than the first reference value and the sum of acceleration variations is smaller than the second reference value and greater than or equal to the third reference value, the controller 1800 may change the rotation speed of the brush 712 and/or the rotation speed of the suction motor 51 to a medium speed (S145).

The controller 1800 determines whether the sum of acceleration variations is greater than or equal to a fourth reference value (S143).

If the sum of acceleration variations is smaller than the second reference value, the controller 1800 determines whether the sum of acceleration variations is greater than or equal to the fourth reference value (S143). Obviously, if the x-axis acceleration variation is smaller than the first reference value and greater than or equal to the third reference value, and the sum of acceleration variations is smaller than the second reference value, the controller 1800 determines whether the sum of acceleration variations is greater than or equal to the fourth reference value (S143).

If the sum of acceleration variations is smaller than the second reference value, and the sum of acceleration variations is greater than or equal to the fourth reference value, the controller 1800 may change the rotation speed of the brush 712 and/or the rotation speed of the suction motor 51 to a medium speed (S145). Obviously, if the x-axis acceleration variation is smaller than the first reference value and smaller than the third reference value, and the sum of acceleration variations is smaller than the second reference value, and the sum of acceleration variations is greater than or equal to the fourth reference value, the controller 1800 may change the rotation speed of the brush 712 and/or the rotation speed of the suction motor 51 to a medium speed (S145).

If the sum of acceleration variations is smaller than the second reference value, and the sum of acceleration variations is smaller than the fourth reference value, the controller 1800 may change the rotation speed of the brush 712 and/or the rotation speed of the suction motor 51 to a low speed (S150). Obviously, if the x-axis acceleration variation is smaller than the first reference value and smaller than the third reference value, and the sum of acceleration variations is smaller than the second reference value, and the sum of acceleration variations is greater than or equal to the fourth reference value, the controller 1800 may change the rotation speed of the brush 712 and/or the rotation speed of the suction motor 51 to a low speed (S150).

The controller 1800 determines whether the z-axis acceleration variation is greater than or equal to a fifth reference value (S160). Specifically, the controller 1800 determines whether the z-axis acceleration variation is greater than or equal to the fifth reference value regardless of the rotation speed of the brush 172 and the rotation speed of the suction motor.

If the z-axis acceleration variation is greater than or equal to the fifth reference value, the controller 1800 may turn off the brush motor 718 and/or the suction motor 51 (S180).

If the z-axis acceleration variation is smaller than the fifth reference value, the controller 1800 determines whether the z-axis acceleration variation is greater than or equal to a sixth reference value, the x-axis acceleration variation is greater than or equal to a seventh reference value, and the y-axis acceleration variation is greater than or equal to an eighth reference value (S170).

If the z-axis acceleration variation is greater than or equal to the sixth reference value, the x-axis acceleration variation is greater than or equal to the seventh reference value, and the y-axis acceleration variation is greater than or equal to the eighth reference value, the controller 1800 may turn off the brush motor 718 and/or the suction motor 51.

While the present disclosure has been particularly shown and described with reference to preferred embodiments thereof, it will be understood by those skilled in the art that the present disclosure is not limited to those exemplary embodiments and various changes in form and details may be made therein without departing from the scope and spirit of the invention as defined by the appended claims and should not be individually understood from the technical spirit or prospect of the present disclosure.

## Claims

1. A cleaner comprising:
a suction nozzle configured to suck in outside air;
a brush motor configured to rotate a brush installed in the suction nozzle;
a suction motor configured to generate a suction force of the suction nozzle;
an acceleration sensor installed on the suction nozzle and configured to sense accelerations along three axes that are orthogonal to each other in a spatial coordinate system;
a power supply unit configured to supply power to the brush motor and the acceleration sensor; and
a controller configured to control the brush motor, the suction motor, and the power supply unit based on a variation of an x-axis acceleration provided by the acceleration sensor and a sum of acceleration variations which is obtained by summing variations of x-, y-, and z-axis accelerations provided by the acceleration sensor.

2. The cleaner of claim 1, wherein the controller is configured to determine a stop motion of the suction nozzle based on the acceleration variation provided by the acceleration sensor, and in response to the stop motion of the suction nozzle being maintained for a first period of time or more, is configured to turn off the brush motor and the suction motor.

3. The cleaner of claim 1, wherein the controller is configured to determine a stop motion of the suction nozzle based on the acceleration variation provided by the acceleration sensor, and in response to the stop motion of the suction nozzle being maintained for a second period of time or more, is configured to turn off the power supply unit.

4. The cleaner of claim 1, wherein the controller is configured to determine a stop motion of the suction nozzle based on the acceleration variation provided by the acceleration sensor, and in response to the stop motion of the suction nozzle being maintained for a first period of time or more, is configured to turn off the brush motor and the suction motor, and in response to the stop motion of the suction nozzle being maintained for a second period of time greater than the first period of time, is configured to turn off the power supply unit.

5. The cleaner of any one of claims 2 to 4, wherein in response to the x-axis acceleration variation being greater than or equal to a first stop reference value and the sum of acceleration variations being greater than or equal to a second stop reference value, the controller is configured to determine that a motion of the suction nozzle is the stop motion.

6. The cleaner of claim 1, wherein the controller is configured to control a rotation speed of the brush based on the variation of the x-axis acceleration provided by the acceleration sensor and the sum of acceleration variations which is obtained by summing the variations of the x-, y-, and z-axis accelerations provided by the acceleration sensor.

7. The cleaner of claim 6, wherein in response to the x-axis acceleration variation being greater than or equal to a first reference value, the controller is configured to change the rotation speed of the brush to a high speed.

8. The cleaner of claim 6, wherein in response to the sum of acceleration variations being greater than or equal to a second reference value, the controller is configured to change the rotation speed of the brush to a high speed.

9. The cleaner of claim 6, wherein in response to the x-axis acceleration variation being greater than or equal to a first reference value, or in response to the sum of acceleration variations being greater than or equal to the second reference value, the controller is configured to change the rotation speed of the brush to a high speed.

10. The cleaner of claim 6, wherein in response to the x-axis acceleration variation being smaller than the first reference value and greater than or equal to a third reference value, the controller is configured to change the rotation speed of the brush to a medium speed.

11. The cleaner of claim 6, wherein in response to the sum of acceleration variations being smaller than the second reference value and greater than or equal to a fourth reference value, the controller is configured to change the rotation speed of the brush to a medium speed.

12. The cleaner of claim 6, wherein in response to the x-axis acceleration variation being smaller than the third reference value, and in response to the sum of acceleration variations being smaller than the fourth reference value, the controller is configured to change the rotation speed of the brush to a low speed.

13. The cleaner of claim 1, wherein in response to the x-axis acceleration variation being greater than or equal to the first reference value, and in response to the sum of acceleration variations being greater than or equal to the second reference value, the controller is configured to change a rotation speed of the suction motor to a high speed.

14. The cleaner of claim 1, wherein in response to the x-axis acceleration variation being smaller than the first reference value and greater than or equal to the third reference value, the controller is configured to change the rotation speed of the suction motor to a medium speed.

15. The cleaner of claim 1, wherein in response to the x-axis acceleration variation being smaller than the third reference value, and in response to the sum of acceleration variations being smaller than the fourth reference value, the controller is configured to change the rotation speed of the suction motor to a low speed.

16. The cleaner of claim 1, further comprising a suction port through which the outside air is introduced, the suction port formed in a lower surface of the suction nozzle, wherein the y-axis is a direction parallel to a direction of a rotating shaft of the brush, the x-axis is a direction orthogonal to the y-axis, and the z-axis is a direction orthogonal to the x-axis, the y-axis, and the lower surface of the suction nozzle.

17. The cleaner of claim 2, wherein in response to determining that a motion of the suction nozzle is not the stop motion, the controller is configured to control a rotation speed of the brush and a rotation speed of the suction motor based on the variation of the x-axis acceleration provided by the acceleration sensor and the sum of acceleration variations which is obtained by summing the variations of the x-, y-, and z-axis accelerations provided by the acceleration sensor.

18. A cleaner comprising:
a brush motor configured to rotate a brush installed in a suction nozzle;
a suction motor configured to generate a suction force of the suction nozzle;
an acceleration sensor installed on the suction nozzle and configured to sense accelerations along three axes that are orthogonal to each other in a spatial coordinate system;
a power supply unit configured to supply power to the brush motor and the acceleration sensor; and
a controller configured to turn off at least one of the brush motor, the suction motor, and the power supply unit based on a variation of an x-axis acceleration provided by the acceleration sensor and a sum of acceleration variations which is obtained by summing variations of x-, y-, and z-axis accelerations provided by the acceleration sensor.

19. A method of controlling a cleaner, the method comprising:
a detecting operation of detecting accelerations along three axes of a suction nozzle;
a determining operation of determining a stop motion of the suction nozzle based on the accelerations along the three axes; and
a pause operation of turning off a brush motor and a suction motor in response to the stop motion of the suction nozzle being maintained for a first period of time.

20. The method of claim 19, further comprising a power-off operation of turning off power of the cleaner in response to the stop motion of the suction nozzle being maintained for a second period of time greater than the first period of time.
